# EUROPÄISCHE PATENTANMELDUNG

(11) **EP 1 209 050 A2**
(43) Veröffentlichungstag der Anmeldung: **29.05.2002**
(21) Anmeldenummer: 01125717.7
(22) Anmeldetag: 27.10.2001
(51) Int. Cl.: B60S 1/38

(54) **Wischeranordnung und Verfahren zum Herstellen einer Wischeranordnung**

(30) Priorität: 24.11.2000 DE 10058454
(71) Anmelder: ROBERT BOSCH GMBH, 70442 Stuttgart (DE)
(72) Erfinder: Merkel, Wilfried, 77876 Kappelrodeck (DE); Daenen, Roger, 3770 Vlytingen-Riemst (BE)

(57) **Zusammenfassung**

Die Erfindung betrifft eine Wischeranordnung mit einer Spritzvorrichtung (10), welche über mindestens eine Spritzöffnung (12) und mindestens einen Spritzkanal (14) verfügt, wobei der Spritzkanal (14) im Wesentlichen in der von der Ausdehnung der Wischeranordnung festgelegten Längsrichtung verläuft, wobei der Spritzkanal (14) zumindest teilweise aus einem elastischen Material gebildet ist und die mindestens eine Spritzöffnung (12) mit dem Spritzkanal (14) durch Erhöhung des Druckes im Spritzkanal (14) und entsprechende Verformung des elastischen Materials verbindbar ist. Die Erfindung betrifft ferner ein Verfahren zum Herstellen einer Wischeranordnung.

## Beschreibung

Die Erfindung betrifft eine Wischeranordnung mit einer Spritzvorrichtung, welche über mindestens eine Spritzöffnung und mindestens einen Spritzkanal verfügt, wobei der Spritzkanal im Wesentlichen in der von der Ausdehnung der Wischeranordnung festgelegten Längsrichtung verläuft. Die Erfindung betrifft ferner ein Verfahren zum Herstellen einer Wischeranordnung mit einer Spritzvorrichtung.

### Stand der Technik

Gattungsgemäße Wischeranordnungen finden beispielsweise im Kraftfahrzeugbereich Anwendung. Insbesondere werden die Wischeranordnungen zum Reinigen der Windschutzscheibe, der Scheinwerfer und der Heckscheibe verwendet. Es bestehen unterschiedliche Möglichkeiten, eine Reinigungsflüssigkeit auf die zu reinigenden Oberflächen aufzubringen. Bekannt ist, Spritzdüsen auf der Motorhaube, eine Spritzkappe an einem Wischarm, eine Spritzdüse auf einer Stange oder zum Beispiel eine Spritzleiste seitlich am Wischerblatt zu montieren.

Um ein optimales Wischergebnis zu erreichen, ist es erforderlich, die Reinigungsflüssigkeit in optimierter Weise auf die zu reinigende Oberfläche aufzubringen. Nachteilig an vielen Systemen, beispielsweise bei der Anordnung mit Spritzdüsen auf der Motorhaube, ist dabei, dass die aerodynamischen Verhältnisse während des Fahrens des Kraftfahrzeugs das Spritzverhalten beeinflussen.

Als weiteres verbreitetes Problem bei Spritzdüsen ist zu nennen, dass diese bei tiefen Temperaturen einfrieren können, so dass die Waschanlage ausfällt.

### Vorteile der Erfindung

Die Erfindung baut auf der gattungsgemäßen Wischeranordnung dadurch auf, dass der Spritzkanal zumindest teilweise aus einem elastischen Material gebildet ist und dass die mindestens eine Spritzöffnung mit dem Spritzkanal durch Erhöhung des Druckes im Spritzkanal und entsprechende Verformung des elastischen Materials verbindbar ist. Wird die Waschanlage nicht betrieben, so liegt ein geringer Druck in dem Spritzkanal vor, welcher im wesentlichen dem Umgebungsdruck entspricht. In diesem Zustand sorgt das elastische Material, in welchem der Spritzkanal ausgebildet ist, dafür, dass die Spritzöffnung geschlossen ist. Erst durch Erhöhung des Druckes im Spritzkanal wird das Material, in welchem der Spritzkanal ausgebildet ist, so verformt, dass die Spritzöffnung mit dem Kanal verbunden wird. Folglich ist durch eine Druckerhöhung ein Spritzen aus der Spritzöffnung möglich. Nach Absenken des Druckes schließt die Spritzöffnung wieder. Durch die Elastizität des Materials wird die Restflüssigkeit aus der Spritzöffnung ausgetrieben, und folglich kann ein Vereisen der Spritzöffnung vermieden werden. Da es bei der erfindungsgemäßen Anordnung möglich ist, dass die Spritzöffnung in der Nähe der zu reinigenden Oberfläche liegt, ist es möglich, den Einfluss aerodynamischer Effekte auf das Aufspritzen der Reinigungsflüssigkeit zu minimieren.

Es ist zu bevorzugen, wenn mehrere Spritzöffnungen vorgesehen sind. Diese mehreren Spritzöffnungen, welche in vorteilhafter Weise entlang des Wischerblattes ausgebildet sind, sorgen dafür, dass eine Reinigungsflüssigkeit gleichmäßig über die zu reinigende Oberfläche verteilt wird.

Es ist besonders bevorzugt, dass durch den Spritzkanal eine axiale Richtung festgelegt ist, dass in radialer Richtung ein fahnenartiger Bereich an eine Begrenzung des Spritzkanals anschließt, welcher in einer radial verlaufenden Ebene zumindest teilweise geteilt ist, und dass eine Spritzöffnung durch einen Einschnitt in den fahnenartigen Bereich realisiert ist. Eine derartige Spritzvorrichtung ist besonders einfach im Zusammenhang mit einer Wischeranordnung-herstellbar. Durch die Teilung entlang der radial verlaufenden Ebene und die Einschnitte in einen fahnenartigen Bereich, in welcher diese Teilungsebene verläuft, wird die Elastizität bereitgestellt, so dass über die Druckänderung ein Spritzen durch die Spritzöffnungen eingeleitet werden kann.

Es ist vorteilhaft, wenn der Einschnitt rechteckig, rund, oval oder spitzwinklig ist. Durch die Formgebung der Einschnitte kann die Form des Spritzstrahls beeinflusst werden. Hierdurch kann man unterschiedlichen Wischergeometrien und insbesondere unterschiedlichen Abständen der Spritzöffnung zu der zu reinigenden Oberfläche Rechnung tragen.

Es ist vorteilhaft, wenn mehrere Einschnitte gleiche und/oder verschiedene Formen aufweisen. Mehrere Einschnitte mit gleichen Formen sind in vielen Fällen nützlich, da an allen Stellen des Wischerblattes vergleichbare Spritzergebnisse erwünscht sind. Es kann jedoch auch der Fall auftreten, dass an unterschiedlichen Stellen unterschiedliche Spritzergebnisse gewünscht sind, beispielsweise mehr oder weniger Spritzflüssigkeit, oder dass sehr unterschiedliche aerodynamische Verhältnisse an den unterschiedlichen Bereichen eines Wischerblattes vorliegen. In diesem Fall kann es sinnvoll sein, über die Geometrie der Einschnitte das Spritzergebnis in unterschiedlicher Weise zu beeinflussen.

Vorzugsweise ist auf jeder Seite der Wischerlippe eine Spritzvorrichtung ausgebildet. Somit kann Flüssigkeit bei beiden Wischrichtungen des Wischerblattes unmittelbar vor den nachfolgend zu überwischenden Bereich aufgebracht werden.

Es ist vorteilhaft, wenn die Spritzvorrichtung einstückig mit dem Wischergummi ausgebildet ist und aus demselben Material besteht. In diesem Fall kann die Spritzvorrichtung bei der Herstellung des Wischergummis in einem einheitlichen Herstellungsprozess zumindest teilweise hergestellt werden. Hierfür eignet sich ein Extrusionsverfahren, in welchem entweder die Einschnitte zur Realisierung der Spritzöffnungen bereits miteingeformt werden oder der fahnenartige Bereich ohne Einschnitte für das nachfolgende Einbringen der Einschnitte vorbereitet wird.

Es ist nützlich, wenn die Spritzvorrichtung an dem Wischergummi durch ein Coextrusionsverfahren angefügt ist. Die Verwendung eines derartigen Coextrusionsverfahrens gestattet die Verwendung unterschiedlicher Materialien für den Wischergummi und die Spritzvorrichtung, so dass beide Elemente im Hinblick auf ihre materialbedingten Eigenschaften optimiert werden können.

Es kann auch vorteilhaft sein, wenn die Spritzvorrichtung an einer Federschiene durch ein Coextrusionsverfahren angefügt ist. Federschienen sind häufig aus extrudiertem Kunststoff gefertigt, so dass sich auch hier ein Coextrusionsverfahren mit optimaler Materialwahl für die Spritzvorrichtung anbietet.

Die Erfindung besteht ferner in einem Verfahren mit den Schritten:
- Formen eines Spritzkanals, welcher in axialer Richtung verläuft,
- Formen eines fahnenartigen Bereiches, welcher in radialer Richtung an eine Begrenzung des Spritzkanals anschließt, wobei der fahnenartige Bereich in einer radial verlaufenden Ebene zumindest teilweise geteilt ist, und
- Einbringen von mindestens einer Spritzöffnung durch Einschneiden des fahnenartigen Bereiches.

Damit steht ein rationelles Verfahren zur Herstellung einer in vielfältiger Weise optimierbaren Wischeranordnung zur Verfügung.

Besonders vorteilhaft ist es, wenn mehrere Spritzöffnungen eingebracht werden. Diese mehreren Spritzöffnungen, welche in vorteilhafter Weise entlang des Wischerblattes ausgebildet sind, sorgen dafür, dass eine Reinigungsflüssigkeit gleichmäßig über die zu reinigende Oberfläche verteilt wird.

Vorzugsweise wird an jeder Seite der Wischerlippe eine Spritzvorrichtung ausgebildet. Somit kann Flüssigkeit bei beiden Wischrichtungen des Wischerblattes unmittelbar vor den nachfolgend zu überwischenden Bereich aufgebracht werden.

Es ist von besonderem Vorteil, wenn die Spritzvorrichtung einstückig mit dem Wischergummi aus demselben Material gebildet wird. In diesem Fall kann die Spritzvorrichtung bei der Herstellung des Wischergummis in einem einheitlichen Herstellungsprozess zumindest teilweise hergestellt werden. Hierfür eignet sich ein Extrusionsverfahren, in welchem entweder die Einschnitte zur Realisierung der Spritzöffnungen bereits miteingeformt werden oder der fahnenartige Bereich ohne Einschnitte für das nachfolgende Einbringen der Einschnitte vorbereitet wird.

Ebenfalls kann es nützlich sein, wenn die Spritzvorrichtung an dem Wischergummi durch ein Coextrusionsverfahren angefügt wird. Die Verwendung eines derartigen Coextrusionsverfahrens gestattet die Verwendung unterschiedlicher Materialien für den Wischergummi und die Spritzvorrichtung, so dass beide Elemente im Hinblick auf ihre materialbedingten Eigenschaften optimiert werden können.

Es kann auch von Vorteil sein, wenn die Spritzvorrichtung an einer Federschiene durch ein Coextrusionsverfahren angefügt wird. Federschienen sind häufig aus extrudiertem Kunststoff gefertigt, so dass sich auch hier ein Coextrusionsverfahren mit optimaler Materialwahl für die Spritzvorrichtung anbietet.

Der Erfindung liegt die überraschende Erkenntnis zugrunde, dass eine Spritzvorrichtung in einfacher Weise an einem Scheibenwischer angeordnet werden kann, wobei die Spritzeigenschaften optimiert werden können. Diese Optimierung bezieht sich einerseits darauf, dass die Spritzöffnungen sehr nah an der zu reinigenden Oberfläche angeordnet werden können. Dies hat den Vorteil, dass der Einfluss aerodynamischer Effekte minimiert wird. Zum anderen können die Spritzeigenschaften durch die Formgebung der Einschnitte, welche die Öffnungen realisieren, beeinflusst werden. Aufgrund einer hohen Vereinheitlichung des Herstellungsverfahrens ergibt sich eine besonders kostengünstige Lösung für die Fertigung von Wischeranordnungen.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine perspektivische Darstellung einer ersten Ausführungsform einer erfindungsgemäßen Wischeranordnung;
- Figur 2: eine perspektivische Darstellung einer zweiten Ausführungsform einer erfindungsgemäßen Wischeranordnung und
- Figur 3: eine perspektivische Darstellung einer dritten Ausführungsform einer erfindungsgemäßen Wischeranordnung.

### Beschreibung der Ausführungsbeispiele

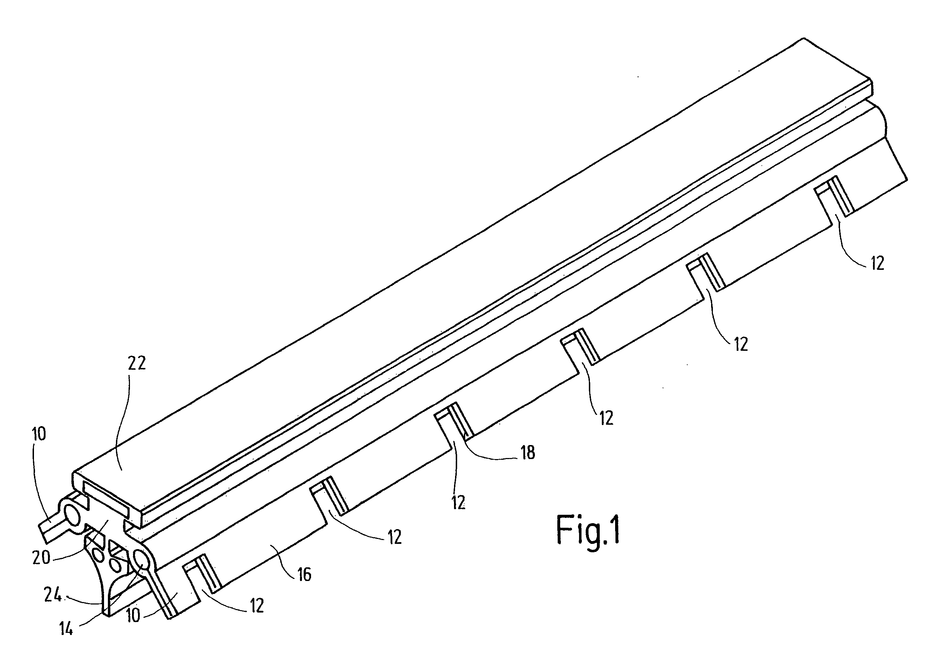

Figur 1 zeigt eine perspektivische Darstellung einer ersten Ausführungsform einer erfindungsgemäßen Wischeranordnung. An der Wischeranordnung sind zwei Spritzvorrichtungen 10 angeordnet, wobei nur eine im Detail zu erkennen ist. Die Spritzvorrichtung 10 hat einen Spritzkanal 14, welcher sich im Wesentlichen in der von der Ausdehnung der Wischeranordnung festgelegten Längsrichtung erstreckt. Im Wesentlichen senkrecht zu dieser axialen Richtung erstreckt sich in radialer Richtung ein fahnenartiger Bereich 16. Dieser fahnenartige Bereich ist durch eine radial verlaufende Ebene 18 zumindest teilweise geteilt. Der fahnenartige Bereich 16 ist mit Einschnitten 12 versehen. Auf diese Weise werden Spritzöffnungen zur Verfügung gestellt.

Im drucklosen Zustand, das heißt in dem Zustand, in welchem die Waschanlage außer Betrieb ist und der Druck in dem Kanal 14 im Wesentlichen dem Atmosphärendruck entspricht, sind die Spritzöffnungen aufgrund der Elastizität des Materials, aus welchem die Spritzvorrichtung gefertigt ist, geschlossen. Erst nach Erhöhung des Druckes im Spritzkanal 14 gibt das elastische Material nach, wodurch eine Spritzöffnung 12 öffnet. Folglich tritt Reinigungsflüssigkeit aus den Spritzöffnungen 12 aus. Diese Reinigungsflüssigkeit wird in der Nähe der Wischerlippe 24 auf die zu reinigende Oberfläche aufgebracht, was für einen definierten Reinigungsvorgang besonders nützlich ist.

In der Ausführungsform gemäß Figur 1 ist die Spritzvorrichtung 10 aus demselben Material gefertigt wie der gesamte Wischergummi 20. Folglich ist die Herstellung besonders einfach. Beispielsweise kann der gesamte Wischergummi 20 einschließlich der Spritzvorrichtung 10 in einem einzigen Extrusionverfahren gefertigt werden. Nachträglich sind dann lediglich noch die Einschnitte 12 für die Darstellung der Öffnungen einzubringen.

Es kann jedoch auch nützlich sein, wenn eine Wischeranordnung, so wie sie in Figur 1 dargestellt ist, unterschiedliche Materialien für den Wischergummi 20 und für die Spritzvorrichtung 10 verwendet. Auf diese Weise können beispielsweise die Elastizität der Wischerlippe 24 und die Elastizität der Spritzvorrichtung mit unterschiedlichen Maßgaben optimiert werden.

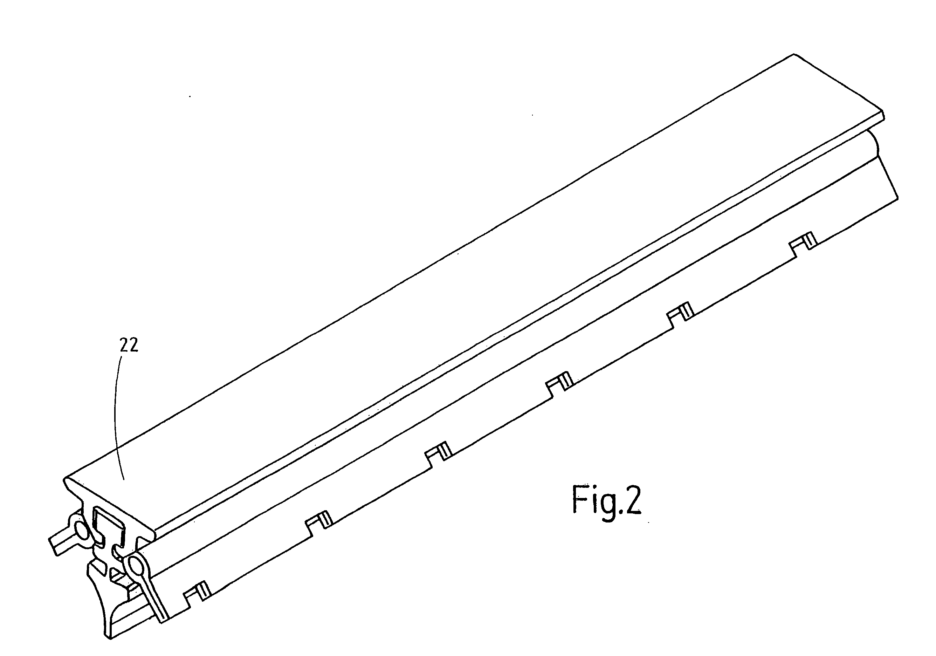

In Figur 2 ist eine weitere Ausführungsform einer erfindungsgemäßen Wischeranordnung perspektivisch dargestellt. Bezugszeichen, welche mit denjenigen aus Figur 1 übereinstimmen, bezeichnen vergleichbare Elemente. Die Besonderheit bei der Wischeranordnung gemäß Figur 2 besteht darin, dass die Spritzvorrichtung 10 an der Federschiene 22 der Wischeranordnung angefügt ist. Dieses Anfügen kann mittels eines Coextrusionsverfahrens erfolgen, wobei für die aus Kunststoff gefertigte Federschiene 22 ein anderes Material verwendet wird als für die Spritzvorrichtung 10. In dem in Figur 2 dargestellten Beispiel sind die Einschnitte 12 zur Realisierung der Öffnungen kleiner gewählt als in Figur 2, was die Variationsmöglichkeiten veranschaulichen soll, welche auf der Grundlage der vorliegenden Erfindung entstehen.

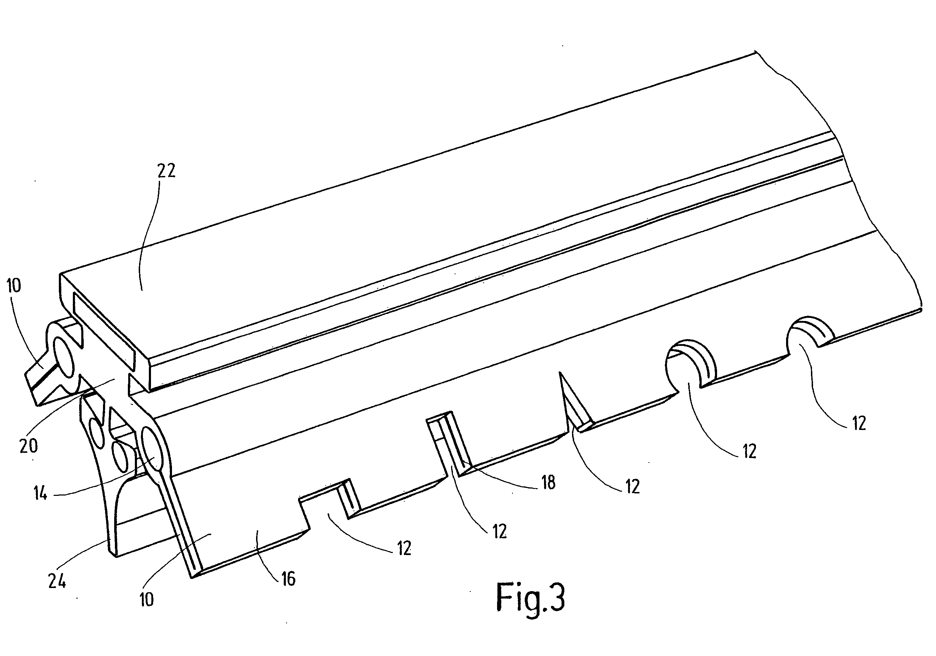

In Figur 3 ist eine weitere Ausführungsform einer erfindungsgemäßen Wischeranordnung in perspektivischer Darstellung gezeigt. Die Wischeranordnung gemäß Figur 3 entspricht in ihrem grundsätzlichen Aufbau derjenigen aus Figur 1, wobei gleiche Bezugszeichen auf vergleichbare Komponenten deuten. In Figur 3 ist zusätzlich veranschaulicht, dass die Einschnitte 12 zur Darstellung der Öffnungen in der Spritzvorrichtung 10 unterschiedliche Gestalt haben können, wobei insbesondere im Hinblick auf das Spritzergebnis Variationsmöglichkeiten bestehen. Neben den dargestellten Formen der Öffnungen sind zahlreiche andere Formgebungen denkbar.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Wischeranordnung mit einer Spritzvorrichtung (10), welche über mindestens eine Spritzöffnung (12) und mindestens einen Spritzkanal (14) verfügt, wobei der Spritzkanal (14) im Wesentlichen in der von der Ausdehnung der Wischeranordnung festgelegten Längsrichtung verläuft, **dadurch gekennzeichnet,**
- **dass** der Spritzkanal (14) zumindest teilweise aus einem elastischen Material gebildet ist und
- **dass** die mindestens eine Spritzöffnung (12) mit dem Spritzkanal (14) durch Erhöhung des Druckes im Spritzkanal (14) und entsprechende Verformung des elastischen Materials verbindbar ist.

2. Wischeranordnung nach Anspruch 1, **dadurch gekennzeichnet, dass** mehrere Spritzöffnungen vorgesehen sind.

3. Wischeranordnung nach Anspruch 1 oder 2, **dadurch gekennzeichnet,**
- **dass** durch den Spritzkanal (14) eine axiale Richtung festgelegt ist,
- **dass** in radialer Richtung ein fahnenartiger Bereich (16) an eine Begrenzung des Spritzkanals (14) anschließt, welcher in einer radial verlaufenden Ebene (18) zumindest teilweise geteilt ist, und
- **dass** eine Spritzöffnung (12) durch einen Einschnitt in den fahnenartigen Bereich (16) realisiert ist.

4. Wischeranordnung nach einem der vorangehenden Ansprüche, **dadurch gekennzeichnet, dass** der Einschnitt (12) rechteckig, rund, oval oder spitzwinklig ist.

5. Wischeranordnung nach einem der vorangehenden Ansprüche, **dadurch gekennzeichnet, dass** mehrere Einschnitte (12) gleiche und/oder verschiedene Form aufweisen.

6. Wischeranordnung nach einem der vorangehenden Ansprüche, **dadurch gekennzeichnet, dass** auf jeder Seite der Wischerlippe (24) eine Spritzvorrichtung (10) ausgebildet ist.

7. Wischeranordnung nach einem der vorangehenden Ansprüche, **dadurch gekennzeichnet, dass** die Spritzvorrichtung (10) einstückig mit dem Wischergummi (20) ausgebildet ist und aus demselben Material besteht.

8. Wischeranordnung nach einem der vorangehenden Ansprüche, **dadurch gekennzeichnet, dass** die Spritzvorrichtung (10) an dem Wischergummi (20) durch ein Coextrusionsverfahren angefügt ist.

9. Wischeranordnung nach einem der vorangehenden Ansprüche, **dadurch gekennzeichnet, dass** die Spritzvorrichtung (10) an einer Federschiene (22) durch ein Coextrusionsverfahren angefügt ist.

10. Verfahren zum Herstellen einer Wischeranordnung mit einer Spritzvorrichtung (10) mit den Schritten:
- Formen eines Spritzkanals (14), welcher in axialer Richtung verläuft,
- Formen eines fahnenartigen Bereiches (16), welcher in radialer Richtung an eine Begrenzung des Spritzkanals (14) anschließt, wobei der fahnenartige Bereich (16) in einer radial verlaufenden Ebene (18) zumindest teilweise geteilt ist, und
- Einbringen von mindestens einer Spritzöffnung (12) durch Einschneiden des fahnenartigen Bereiches (16).

11. Verfahren nach Anspruch 10, **dadurch gekennzeichnet, dass** mehrere Spritzöffnungen (12) eingebracht werden.

12. Verfahren nach Anspruch 10 oder 11, **dadurch gekennzeichnet, dass** an jeder Seite der Wischerlippe (24) eine Spritzvorrichtung (10) ausgebildet wird.

13. Verfahren nach einem der Ansprüche 10 bis 12, **dadurch gekennzeichnet, dass** die Spritzvorrichtung (10) einstückig mit dem Wischergummi (20) aus demselben Material gebildet wird.

14. Verfahren nach einem der Ansprüche 10 bis 13, **dadurch gekennzeichnet, dass** die Spritzvorrichtung (10) an dem Wischergummi (20) durch ein Coextrusionsverfahren angefügt wird.

15. Verfahren nach einem der Ansprüche 10 bis 14, **dadurch gekennzeichnet, dass** die Spritzvorrichtung (10) an einer Federschiene (22) durch ein Coextrusionsverfahren angefügt wird.
